# EUROPEAN PATENT SPECIFICATION

(11) **EP 2 423 832 B1**
(45) Date of publication and mention of the grant of the patent: **26.06.2019**
(21) Application number: 10196982.2
(22) Date of filing: 24.12.2010
(51) Int. Cl.: G06F 16/00

(54) **System and method for providing virtualized file system management for a memory card in a digital environment**
System und Verfahren zur Bereitstellung eines virtualisierten Dateisystemmanagements für eine Speicherkarte in einer digitalen Umgebung
Système et procédé pour fournir une gestion de système de fichiers virtualisés pour carte mémoire dans un environnement numérique

(30) Priority: 31.08.2010 US 873160
(43) Date of publication of application: 29.02.2012
(73) Proprietor: Cisco Technology, Inc., San Jose, CA 95134-1706 (US)
(72) Inventor: Morrison, William H., Cary, NC 27513 (US); Toebes, John, Cary, NC 27513 (US)
(74) Representative: Kazi, Ilya

(56) References cited:
- US-A1- 2006 184 638
- US-A1- 2009 307 603
- US-B1- 7 747 627
- ANONYMOUS: "Wireless Media Stick - set up & streaming demonstration", YouTube , 18 August 2010 (2010-08-18), XP002662107, Retrieved from the Internet: URL:http://www.youtube.com/watch?v=LrtSZBH 2Lzw [retrieved on 2011-10-24] & ANONYMOUS: "Wireless Media Stick - set up & streaming demonstration", YouTube , 18 August 2010 (2010-08-18), Retrieved from the Internet: URL:http://www.youtube.com/v/LrtSZBH2Lzw?v ersion=3&feature=player_detailpage [retrieved on 2011-10-24]
- ANONYMOUS: "Home Server Technologies Inc. presents the Wireless Media Stick at 2010 CeBIT Hannover, Germany", Internet Article , 2 March 2010 (2010-03-02), XP002662108, Retrieved from the Internet: URL:http://hsti.com/press/cebit-2010-press -release [retrieved on 2011-10-24]
- SANDBERG R: "The Sun Network Filesystem: Design, Implementation and Experience", PROCEEDINGS OF THE SUMMER USENIX CONFERENCE, XX, XX, 1 January 1986 (1986-01-01), pages 1-16, XP002462804,

## Description

### TECHNICAL FIELD

This disclosure relates in general to the field of file system management and, more particularly, to providing virtualized file system management for a memory card in a digital environment.

### BACKGROUND

Digital media has become ubiquitous in the 21st century. For example, digital images, music downloading, and file sharing have gained notoriety in recent years. However, maintaining or updating digital information is typically inconvenient, cumbersome, and time consuming for individuals utilizing this particular type of media. In many cases, there are a number of steps that must be completed to keep a digital library current. As a general proposition, the intelligent management of digital media information presents a significant challenge to equipment vendors, device manufacturers, and system designers alike. US 2006/184638 discloses a method for providing adapted web page content to a client. Here, a variety of pre-generated versions of the same web content are stored in a server in advance of the receipt of client requests therefore. Each version is adapted to be displayed on a device with particular display characteristics. Then, when a client request for the content is received, the client display characteristics are determined, and the appropriate version for the client display characteristics selected from the stored versions. The selected version is then sent to the client. US Patent No. 7,747,627 discloses a methods that allows a user to access a file in a computational device. The request for the file includes the filename. The filename is mapped to the location of the file in the computational device. The file is returned if it is present in the cache of the computational device. Otherwise, the file is retrieved from a storage device. US 2009/307603 discloses an image service that uses a uniform resource locator (URL) or other identifier to retrieve dynamic content presentations from the Internet. The image service uses a set of imaging parameters to render HTML files into a static image, sized appropriately, that can be presented on a static display device. A paper entitled "The Sun Network Filesystem: Design, Implementation and Experience" by R. Sandberg published in Proceedings of the Summer Usenix Conference, January 1986, pages 1-16 describes The Sun Network Filesystem (NFS™) that provides transparent, remote access to filesystems. NFS is designed to be easily portable to other operating systems and machine architectures. It uses an External Data Representation (XDR) specification to describe protocols in a machine and system independent way.

Aspects of the invention are set out in the independent claims and preferred features are set out in the dependent claims. Any embodiments described herein that do not fall within the scope of the claims are to be considered as examples.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram illustrating a system for providing file system management in a digital environment in accordance with one embodiment of the present disclosure;
FIGURE 2 is a simplified block diagram illustrating additional details related to an example memory mapping for the system in accordance with one embodiment;
FIGURE 3 is a simplified schematic diagram illustrating further details related to the system in accordance with one embodiment;
FIGURE 4 is a simplified flowchart illustrating details related to certain operations of the system in accordance with one embodiment; and
FIGURE 5 is another simplified flowchart illustrating details related to certain operations of the system in accordance with one embodiment.

### DETAILED DESCRIPTION OF EXAMPLE EMBODIMENTS

### OVERVIEW

An example method is provided and includes receiving a request for a selected digital file and mapping the request for the selected digital file to a replacement digital file. The mapping includes a virtual association between the selected digital file and the replacement digital file that is stored at a destination accessed over a network. The method also includes communicating bytes corresponding to the replacement digital file to a digital device to satisfy the request. In more particular embodiments, the digital device includes a cached table of files, where each of the files includes a respective file size, a respective file name, and a respective memory address. The replacement digital file can be ultimately presented on a display of the digital device.

In more specific embodiments, the replacement digital file is compressed to a different size before being communicated to a next destination. In yet other embodiments, null bytes are added to the replacement digital file in order to comport to a particular size format designated by the digital device. Other embodiments can include the replacement digital file being converted to a particular format based on a designation by the digital device. The request can be associated with metadata that identifies a file size, a file type, or a file address associated with the selected digital file.

### EXAMPLE EMBODIMENTS

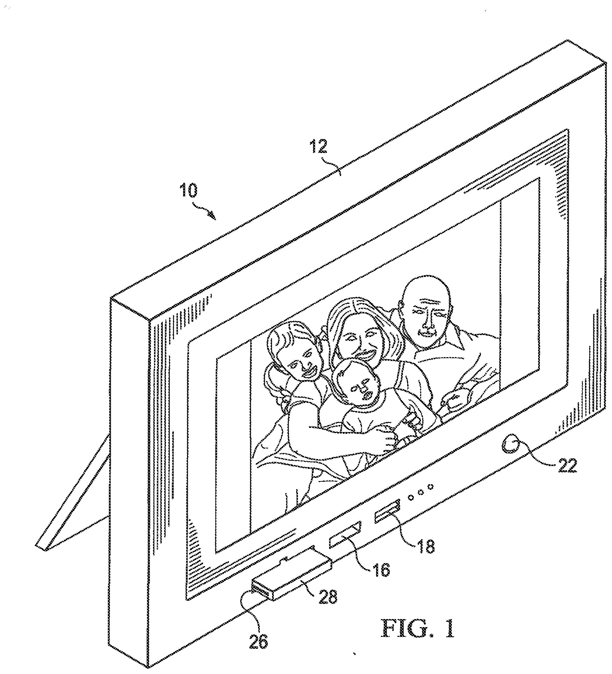

Turning to FIGURE 1, FIGURE 1 is a simplified block diagram of a system 10 for providing virtualized file system management in a digital environment in accordance with one embodiment of the present disclosure. FIGURE 1 includes a digital frame 12, which includes a memory stick receiver 16 and a universal serial bus (USB) port 18. Note that there could be additional memory card formats, which could readily be accommodated by digital frame 12, whereas only a few example formats have been illustrated in FIGURE 1. Digital frame 12 also includes a power switch 22 and a virtual mapping memory card (VMMC) 28, which is provisioned within a memory card adapter 26. VMMC 28 has a suitable WiFi interface such that data can be readily transferred over a local wireless network. Note that in this particular configuration of FIGURE 1, there are no network ports provided around the perimeter of digital frame 12. VMMC 28 offers one possible instantiation of a removable memory element; however, other memory elements such as USB keys, CompactFlash, secure digital (SD) cards, multimedia card (MMC), Smart Media (SM), x-D picture card, universal flash storage (UFS), etc. can readily be used in the memory activities outlined herein. All of these memory elements can effectively offer an interface to a file system, which may be block or bit oriented.

Digital frame 12 is a digital device, which can render digital data stored thereon, provided thereto, or provided via any suitable communications pathway, as detailed below. Additionally, digital frame 12 can determine an order of presentation for a set of selected digital media files through a parsing of an index associated with each of the selected media files. In accordance with certain example implementations of system 10, digital frame 12 can render significantly more files of digital media than would be permitted on a conventional memory card. This ability can be enabled through utilizing a virtual memory mapping on VMMC 28 (i.e., within digital frame 12 itself).

In operational terms, consider an instance where an individual has ten different digital frames at his residence. Manually loading each individual picture frame with images would be time-consuming, as well as organizationally challenging. Ideally, a single memory card of some type could include the family pictures to be uploaded to the digital frames (e.g., a single memory card for a beach vacation, a single memory card for a piano recital, etc.). System 10 can enable a single VMMC 28 to be inserted into any of these ten digital frames, where VMMC 28 is logically accessing a full playlist over a wireless network. Note that the individual storage mechanism (i.e., the individual memory card) may not be sufficient to hold all of the images of the entire family picture album. Consider a case where only 1 megabit of memory space is provisioned in a given memory card. The features of system 10 can still permit VMMC 28 to suitably display all of the images in the family picture album (which could represent 1 gigabyte of memory, or higher). In a general sense, regardless of the digital device and regardless of the memory space, VMMC 28 can systematically access any images of the family picture album by accessing its connection to the configured playlist.

In more specific operational terms, VMMC 28 can provide dummy metadata to digital frame 12 (e.g., during an initial boot-up of digital frame 12). The metadata can pertain to stored file names, sizes, and/or memory address locations of files stored in VMMC 28. Hence, metadata characterizes information based on the inherent properties of the data. Additionally, dummy data can be used for a subsequent virtual mapping, where this dummy metadata information can be cached in digital frame 12. The dummy metadata would not be overwritten until a next boot-up of digital frame 12. Digital frame 12 is configured to request various digital media files using the cached dummy metadata information provided by VMMC 28. In response, VMMC 28 is configured to virtually map the fixed and the cached dummy metadata (received from digital frame 12) to a variable number of downloaded files. These files can be replaced with downloaded files, where the replaced files (or the bytes corresponding thereto) can be sent to digital frame 12 for a suitable presentation of the image data to the user.

In executing this virtual mapping, VMMC 28 can offer a stable file system to digital frame 12, while being able to automatically download files from any network location. Additionally, this can be achieved without upgrading digital frame 12 to include a complex wireless capability for file downloading. In one general sense, system 10 can offer an economically viable solution for presenting a variety of digital media (having a wider variety of attributes), than could otherwise be offered by conventional memory cards.

Before detailing more specific operational capabilities of system 10, it is important to understand some of the limitations of current digital media architectures. The following foundational information may be viewed as a basis from which the present disclosure may be properly explained. Digital media architectures can present digital photographs, video clips, sound clips, music, etc. to a user. When a user gathers new digital files (e.g., takes pictures using a digital camera, records a video of a recent event, downloads music from a website, etc.), typically the user seeks to update the digital media device to reflect this recent information. For example, updating digital photos on a conventional photo frame device (e.g., a digital media frame, an electronic display, a liquid crystal display (LCD)) requires a physical manipulation of devices. Hence, when a person seeks to put the latest photos on a conventional photo frame device, the following steps occur. First, the photos are downloaded from a camera to the computer. This could be done automatically over a wireless network in certain instances (e.g., using an Eye-Fi card). Second, the conventional memory card from the photo frame device is removed, and then inserted into a computer. From the computer, the selected photos can be copied over to the conventional memory card. The memory card can then be removed from the computer and reinserted into the photo frame device. As is evident, such a process is unnecessarily time-consuming and, further, involves repeated participation from a given user.

As a separate operational challenge, the photo frame is typically manufactured and deployed with software for downloading pictures. Such downloading may include wireless capabilities, which can involve either a modification of the photo frame, or a replacement of photo frame software with a version that could accommodate the wireless downloading. Similarly, these limitations and issues apply equally to televisions and audio-visual (AV) equipment, which can include memory card readers to display the digital media.

Other digital media devices allow photos, music, and movies to be stored either in an internal memory, or in a removable conventional memory card. In both cases, media data is updated via a universal serial bus (USB) cable. In other instances, a conventional digital media device can have a cellular connection, which is associated with a phone number to which pictures can be sent. Still other digital media architectures have introduced wireless or modem-based frames into the market space. However, these digital media technologies are universally more expensive than their equivalents in the non-wireless digital media technology space. Moreover, most of these more sophisticated architectures require a monthly subscription. Yet other digital media devices fail to include a wireless web-based connectivity option due to increased cost and/or such an option is impractical because of the obligations imposed on a user for device configuration. Note that most individuals seek simplicity in using their digital media devices, where the responsibility in setting up a network device can represent a point of frustration. Ideally, a given individual seeks to minimize the number of times they are required to configure their network connections.

Certain hybrid digital media devices have emerged that include some combination of an intermediate data storage and a wireless card. The data storage mechanisms are designed to receive image data from a digital camera, where the data storage mechanism can publish or push its media files to a computer or to a website via a wireless connection. Still other devices can use a secure digital (SD) memory or a flash form factor memory, which allows for the addition of wireless connectivity to an existing personal digital assistant (PDA) or other wireless device. These wireless devices would necessarily have additional software on the PDA to support the memory card.

System 10 can address certain shortcomings associated with the limitations of existing digital media devices in the following ways. In one particular implementation, VMMC 28 is provisioned to provide a dummy index of all media presentation files to digital frame 12. This dummy index can be provided when digital frame 12 is initiated (e.g., booted, rebooted, etc.). Digital frame 12 can then cycle through the media file cache entries as appropriate: reading them from VMMC 28 as needed. Although VMMC 28 presents digital frame 12 with media presentation files as triggered by a request emanating from digital frame 12, the media presentation files VMMC 28 conveys to digital frame 12 are not necessarily the actual media files being requested. In other words, VMMC 28 virtually 'remaps' requests into other media presentation files, where these operations can include modifying the replaced and remapped file. This remapping and replacement is unknown to digital frame 12, which nonetheless displays or otherwise broadcasts the replaced, remapped digital media information. In one general sense, this virtual remapping of media presentation files by VMMC 28 enables a user to view digital media presentations that can be stored elsewhere in a network: without having to upgrade digital frame 12 for wireless capabilities, and without requiring a physical removal and reinstallation of the memory card.

Note that such operations can apply equally to any digital data devices, apart from the example photo frame devices discussed herein. Such activities can be readily applicable to various other media presentation equipment, which may have a physical flash media interface. Note that modern televisions and AV equipment have added memory card readers, which could readily adopt the teachings of the present disclosure, as detailed below.

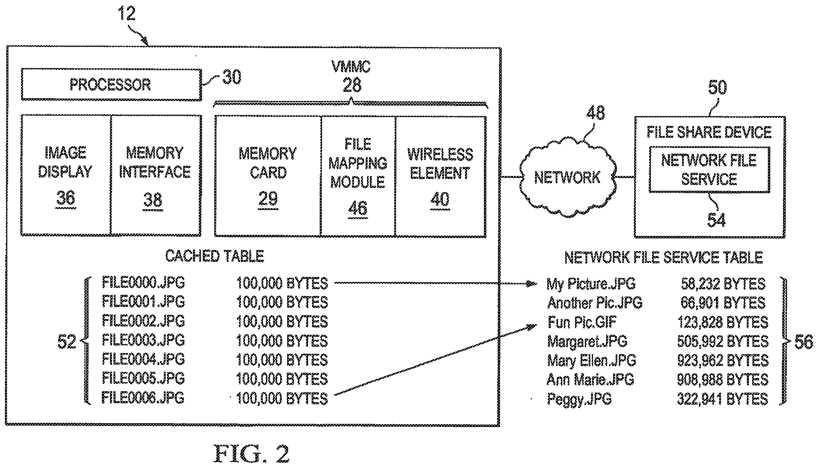

Turning to FIGURE 2, FIGURE 2 illustrates a simplified block diagram illustrating additional details of system 10, including VMMC 28 in a network system in accordance with a particular embodiment. The architecture of FIGURE 2 includes digital frame 12, which further includes a processor 30, an image display 36, and a memory interface 38. Image display 36 can be used to present digital media files. Note that, as used herein in this Specification, the term 'present' is meant to include any type of rendering, exhibiting, demonstrating, showing, depicting, or generally offering image data, which can appear to a given user, an individual, an audience, or another component. The image data can be presented on any suitable display (e.g., surface, screen, monitor, etc.). Memory interface 38 can include a file system that includes a cached table 52 of file names, file types, and/or file sizes, as is illustrated. Information stored in cached table 52 can be read from VMMC 28 at boot-up, where cached table 52 is also employed by digital frame 12 in the context of requesting digital media files.

As depicted in FIGURE 2, VMMC 28 may include a memory card 29, a file mapping module 46, and a wireless element 40. File mapping module 46 is configured to virtually map (e.g., memory map) a file being requested from memory interface 38 (e.g., requested by processor 30 in response to a user request) to an actual file supplied by VMMC 28. This mapping may include an asymmetric mechanism in which a different file is mapped to the file being requested by processor 30. Stated in different terminology, file mapping module 46 has the intelligence to receive a file request and map that request to another downloaded (or downloadable, or previously stored) digital file, instead of the actual digital file being requested by digital frame 12. Hence, the requested digital file is actually different from that which is delivered as a replacement file to satisfy the incoming request. It should be noted that image display 36 is oblivious to this backend mapping activity and, therefore, image display 36 can suitably display the virtually mapped file. Note that the term 'virtual' is simply referring to the notion that the ultimate file being delivered to a digital device is not necessarily resident on that digital device. Instead, that requested digital file is linked to a file being stored in some type of network element (i.e., a file share device), which can readily be accessed in order to deliver the appropriate image data requested by the digital device.

VMMC 28 also can include software capable of securely connecting to a computer on the same network. However, in other embodiments, VMMC 28 includes a wireline or fixed element, which is not illustrated for purposes of simplification. FIGURE 2 can also include a network 48 that can be coupled between VMMC 28 and a file share device 50. Although the present Specification discusses wireless, it should also be understood that the media devices discussed herein can readily cooperate with any type of fixed network connection.

In one particular example, file share device 50 includes a network file service 54. Network file service 54 can include a network file service table 56, which can include several different files (having different sizes and which reflect different types of digital media presentation information). Note that network file service table 56 can include a greater number of files than the number of files accounted for by cached table 52. For example, and as depicted by FIGURE 2, network file service table 56 can include files of both JPG format and .GIF format, where the formats have varying sizes: both above and below the 100,000 bytes defined in cached table 52.

Operationally, and with reference to the capabilities of VMMC 28, upon boot-up of digital frame 12, memory interface 38 can be given information regarding file size, name, and/or a starting address of digital files stored in VMMC 28. These are effectively dummy pieces of information that can be stored in cached table 52. File share device 50 loads a plurality of files into VMMC 28, where these files can be of differing sizes, formats, and can be of a greater number than is recognized by digital frame 12. File mapping module 46 can receive a request from memory interface 38 for certain files referenced in cached table 52. Then, file memory mapping module 46 virtually maps files received from file share device 50 into the requested file, and then replaces the requested file with the virtually mapped file. This replaced, virtually mapped file is then sent to digital frame 12. Digital frame 12 ultimately displays the replacement file, rather than the originally requested file.

In some embodiments, VMMC 28 can employ any number of preprocessing operations to further manipulate the digital data. For example, VMMC 28 may compress a downloaded (larger) file into a standard size. VMMC 28 may also add null bytes in order to pad a file to a standard size format. VMMC 28 can further perform a file type conversion to convert a file into a standard presentation format, such as JPEG, which can readily be displayed by digital frame 12. In one particular example, the preprocess conversions are utilized such that the replaced converted files are presented to digital frame 12 in a manner consistent with the dummy data being stored in cached table 52. In one embodiment, JPEG file formats are a final (e.g., or default) format delivered by VMMC 28, where any number of file formats such as .GIF may be converted to a JPEG file format with minimal impact on processing time.

After receiving a digital media file from VMMC 28, digital frame 12 attempts to open and read one of the delivered images. Since VMMC 28 understands the sectors to which each virtual picture correspond, VMMC 28 can fulfill an incoming request with image data received from wireless element 40. Also, because JPEG and GIF have size information in their headers, picture-processing software of VMMC 28 may ignore extra bytes of image data that is unnecessary. Digital frame 12 can either randomly access pictures or sequentially access them.

In the context of network scenarios, although digital frame 12 is notified that VMMC 28 has a limited number of pictures (e.g., memory interface is informed that only ten pictures are stored in cached table 52 (named: 0001.jpg, 0002.jpg,...)) VMMC 28 can have one hundred pictures that it can access wirelessly from file share device 50. For example, if network file service table 56 holds one hundred pictures (named: L1001.JPG, L1002.jpg,...), then the first time digital frame 12 requests '0001.JPG', VMMC 28 can return 'L1001JPG' (padded with nulls to meet the specified size). In one embodiment, VMMC 28 stores at least some of these downloaded pictures in memory card 29.

To enable a user interface to configure wireless element 40 or VMMC 28 settings, VMMC 28 can choose to return a configuration/setup picture to digital frame 12, when VMMC 28 has detected that wireless element 40 is not yet configured. If VMMC 28 includes some type of user interface (e.g., such as a button to initiate/confirm setup), and this interface is yet to be activated, VMMC 28 can continue to return a setup image for any picture that digital frame 12 requests, such that the setup screen remains viewable for the user. Furthermore, because the mapping of real pictures is virtual, VMMC 28 can choose the order of pictures that the user sees: regardless of the order being requested by digital frame 12. In various embodiments, either VMMC 28 or network share device 50 can convert images in any form to a common one such (e.g., JPEG being a universal format for this particular environment). Hence, even if the file on the server is a .GIF, VMMC 28 or file share device 50 can provide a suitable format by converting the requested image data, or by adjusting a file size where appropriate.

As part of its operational capabilities, when digital frame 12 boots-up, it can determine a size and a set of characteristics for files within memory card 29. This determination can include querying VMMC 28 through various interactive mechanisms, where VMMC 28 can return a broad variety of memory sizes. In one example implementation, the returned memory size can be a function of the actual physical memory on VMMC 28, where these boundaries can be correlated to the limitations of memory card 29. Note that the returned memory size need not be the actual size of the memory of VMMC 28, or of memory card 29. This memory information is then stored in cache table 52 of memory interface 38. In one particular example, the memory allocations in cache table 52 can also be provisioned in file mapping module 46.

When requesting media files, digital frame 12 can request data corresponding to sectors that correspond to its stored directory associated with VMMC 28. VMMC 28 can return replaced entries that correspond to files of sequential numbered values with a given fixed size, where these are selected from network file service table 56 and suitably mapped by file mapping module 46. Subsequently, digital frame 12 may choose to reread cached table 52 in order to request another photograph to display, and VMMC 28 can return different members of the same consistent set of replacement media files until a next virtual remapping occurs. In addition, VMMC 28 has the intelligence to recognize that the digital frame is continuing to read from a previously requested file by monitoring requests for data. If a request is received for the start of the file, and if a previous request was for a part of a different file, VMMC 28 could assume that it can safely substitute any file. Otherwise, VMMC 28 can safely return the same mapped file for the reads for parts of that file.

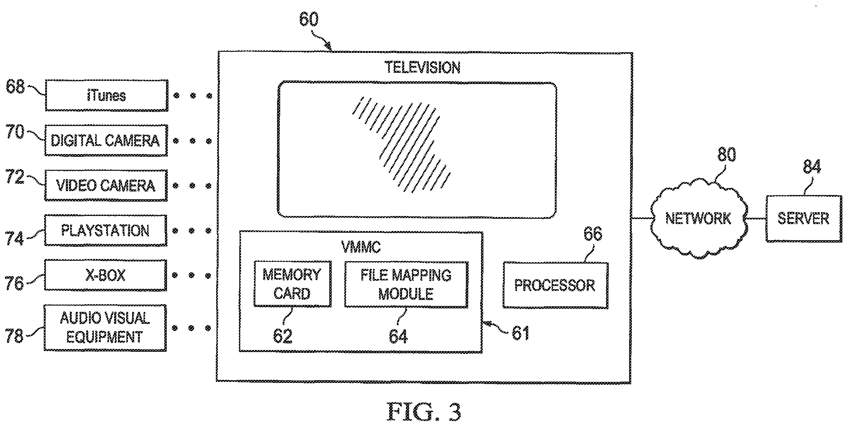

Turning to FIGURE 3, FIGURE 3 is a simplified schematic diagram illustrating further details related to system 10 in accordance with one embodiment. In this particular example, a television 60 (which is a form of a digital media device) is coupled to a network 80 and to a server 84. FIGURE 3 also includes a number of additional digital media devices that can readily be used to achieve the teachings of the present disclosure. For example, these potential digital media devices can cooperate in conjunction with television 60 (i.e., where television 60 operates as a proxy, and the media devices see a single file system, while a VMMC 61 performs the mapping operations), or operate independently (i.e., be substituted for television 60) to execute the intelligent memory mapping operations described herein. The digital media devices can include an element associated with iTunes technology (e.g., iTunes 66), a digital camera 70, a video camera 72, a Playstation 74, an X-Box 76, AV equipment 78, etc. Note that these illustrated media devices are reflective of one set of the many media devices that can be used in the architecture outlined herein. To this end, the term 'digital device' is a broad term that encompasses any device capable of the digital transmissions detailed herein. This can include end-user devices that seek to offload certain memory storage constraints. Such devices could include cellular telephones, iPhones, iPads, Google Droids, laptops, desktops, personal digital assistants (PDAs), digital video recorders (DVRs), or any other device that can execute the mapping operations disclosed herein.

Network 80 can be a wired network or a wireless network. Server 84 can be any one of a variety of file sharing devices, network appliances, processor components, modules, etc.: all of which are included within the broad term 'network element.' In this particular example, television 60 includes VMMC 61, which includes a memory card 62, a file mapping module 64, and a processor 66. Processor 66 may be used in making various selections or determinations regarding files to be requested, ordering of the files that are requested, rendering the files being delivered, etc. Various files can be downloaded from server 84 (or from any other network destination) and suitably stored in various formats within VMMC 61.

In some embodiments, network 80 represents a series of points or nodes of interconnected communication paths for receiving and transmitting packets of information that propagate through network 80. Network 80 offers a communicative interface between network elements, digital media devices, etc. and may be any local area network (LAN), wireless LAN (WLAN), metropolitan area network (MAN), wide area network (WAN), extranet, Intranet, virtual private network (VPN), virtual local area network (VLAN), or any other appropriate architecture or system that facilitates data propagation in a network environment. Network 80 can support a transmission control protocol (TCP)/Internet protocol (IP), or a user datagram protocol (UDP)/IP in particular embodiments of the present disclosure; however, network 80 may alternatively implement any other suitable communication protocol for transmitting and receiving data packets within system 10. Network 80 can foster various types of communications and, further, can be replaced by any suitable network components for facilitating the propagation of data between participants in a conferencing session.

Note that server 84 and digital media devices may share (or coordinate) certain processing operations. Using a similar rationale, their respective memory elements may store, maintain, and/or update data in any number of possible manners. Additionally, because some of these processing and memory elements can be readily combined into a single unit, device, or server (or certain aspects of these elements can be provided within each other), some of the illustrated processors and memory elements may be removed, or otherwise consolidated such that a single processor and/or a single memory location could be responsible for certain activities associated with digital media management control. In a general sense, the arrangement depicted in FIGURE 3 may be more logical in its representations, whereas a physical architecture may include various permutations/combinations/hybrids of these elements.

In one example implementation, VMMC 28 and/or VMMC 61 includes software (e.g., as part of file mapping modules 46, 64) to achieve the virtual memory mapping operations, as outlined herein in this document. Alternatively, several appropriate elements may include software (or reciprocating software) that can coordinate in order to achieve the operations, as outlined herein. In still other embodiments, certain elements of the illustrated FIGURES may include any suitable algorithms, hardware, software, components, modules, interfaces, or objects that facilitate these virtual mapping and substitution operations.

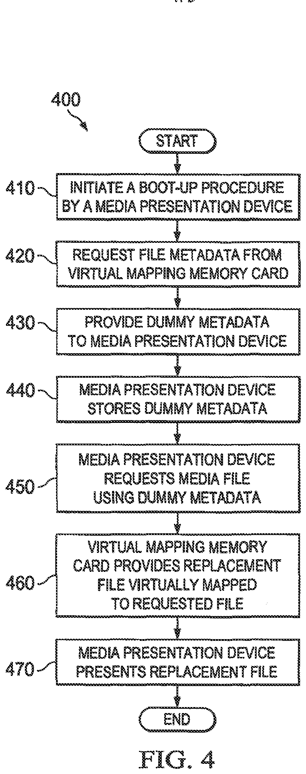

Turning now to FIGURE 4, FIGURE 4 illustrates an example method 400 associated with a digital media device according to one embodiment. In step 410, a media presentation device, such a digital frame 12, initiates a boot-up procedure. In step 420, file metadata regarding purported files stored in VMMC 28 is requested by digital frame 12. For example, file size, file address, sector address of files, and file type are representative of some of the examples of metadata that can be requested. In step 430, dummy metadata is provided by VMMC 28 to digital frame 12. In step 440, the media presentation device can store the dummy metadata for the various media files received from VMMC 28. In step 450, a media presentation device requests a media file from VMMC 28 using the dummy metadata. For example, in the context of FIGURE 2, processor 30 may request 'FILE0006.JPG' to be provided.

Then, in step 460, VMMC 28 provides a replacement mapped file to the media presentation device. For example, VMMC 28 can map 'Fun Pic.GIF' to the requested file and also perform various preprocessing steps. This could include JPEG conversion, compression operations, which may meet the expectations of memory interface 38. Regardless of the number of preprocessing operations that occur, VMMC 28 communicates the requested image data (e.g., potentially reformatted and resized image data) to digital frame 12. In step 470, digital frame 12 presents the replacement media presentation file to a user. This presentation can include a digital photo, a video clip, an audio presentation, image data generally, etc.

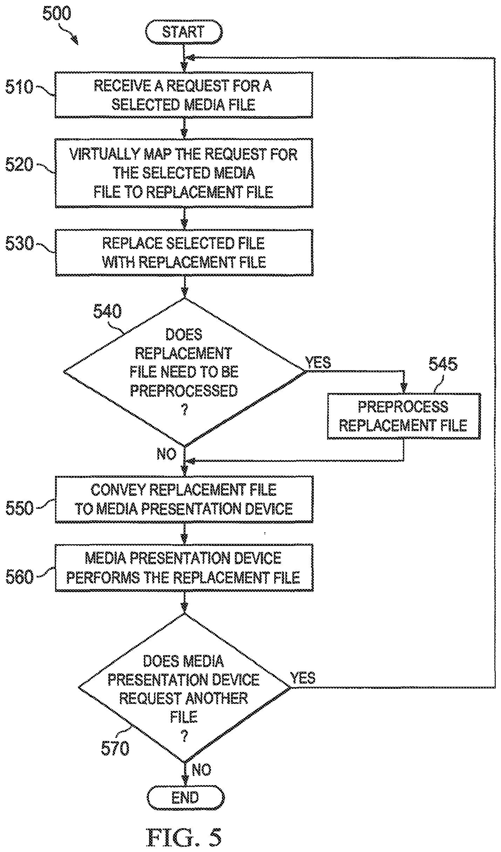

Turning to FIGURE 5, FIGURE 5 is a flowchart illustrating an example method 500 for mapping requested media files to downloaded media files in a digital media system. The method may begin at step 510, where a request may be received by VMMC 28 for a selected media file from a digital media device, such as digital frame 12, or television, video camera, etc. In step 520, VMMC 28 virtually maps the selected file to a media file. In some embodiments, the virtual mapping is initiated by digital frame 12 communicating a size and a sector address to VMMC 28. In step 530, VMMC 28 places the selected file with the mapped replacement file.

In step 540, a determination is made as to whether the mapped filed needs to be preprocessed (e.g., converting a file type, changing a file size, etc.). If yes, then in step 545, the mapped file is preprocessed by VMMC 28. In no, the mapped, replaced file is sent to the digital media device at step 550. In step 560, the digital media device presents the replacement file. In step 570, it is determined whether the digital media device requests another digital media file. If yes, the method can return to step 510; otherwise, this particular flow ends.

Note that in certain example implementations, the various mapping or interface functions outlined herein may be implemented by logic encoded in one or more tangible media (e.g., embedded logic provided in an application specific integrated circuit (ASIC), digital signal processor (DSP) instructions, software (potentially inclusive of object code and source code) to be executed by a processor, or other similar machine, etc.). In some of these instances, a memory element of system 10 can store data used for the operations described herein. This includes the memory element being able to store software, logic, code, or processor instructions that can be executed to carry out the activities described in this Specification. A processor can execute any type of instructions associated with the data to achieve the operations detailed herein in this Specification. In one example, the processor (as shown in FIGURES 2-3) could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read only memory (EPROM), an electrically erasable programmable ROM (EEPROM)) or an ASIC that includes digital logic, software, code, electronic instructions, or any suitable combination thereof.

In one example implementation, VMMCs 28, 61 include software in order to achieve the mapping management functions outlined herein. These activities can be facilitated by server 84 and/or file share device 50. VMMCs 28, 61, file share device 50, and/or server 84 can include memory elements for storing information to be used in achieving the virtual memory mapping as outlined herein. Additionally, VMMCs, 28, 61, file share device 50, and/or server 84 may include a processor that can execute software or an algorithm to help perform the mapping of files, as discussed in this Specification. These devices may further keep information in any suitable memory element (random access memory (RAM), ROM, EPROM, EEPROM, ASIC, etc.), software, hardware, or in any other suitable component, device, element, or object where appropriate and based on particular needs. Any possible memory items (e.g., database, table, cache, etc.) should be construed as being encompassed within the broad term 'memory element.' Similarly, any of the potential processing elements, modules, and machines described in this Specification should be construed as being encompassed within the broad term 'processor.'

Note that with the examples provided herein, interaction may be described in terms of two or three elements. However, this has been done for purposes of clarity and example only. In certain cases, it may be easier to describe one or more of the functionalities of a given set of flows by only referencing a limited number of network elements. It should be appreciated that system 10 (and its teachings) are readily scalable and can accommodate a large number of rooms and sites, as well as more complicated/sophisticated arrangements and configurations. Accordingly, the examples provided herein should not limit the scope or inhibit the broad teachings of system 10 as potentially applied to a myriad of other architectures.

It is also important to note that the steps discussed with reference to FIGURES 1-5 illustrate only some of the possible scenarios that may be executed by, or within, system 10. Some of these steps may be deleted or removed where appropriate, or these steps may be modified or changed considerably without departing from the scope of the present disclosure. In addition, a number of these operations have been described as being executed concurrently with, or in parallel to, one or more additional operations. However, the timing of these operations may be altered considerably. The preceding operational methods have been offered for purposes of example and discussion. Substantial flexibility is provided by system 10 in that any suitable arrangements, chronologies, configurations, and timing mechanisms may be provided without departing from the teachings of the present disclosure.

Although the present disclosure has been described in detail with reference to particular embodiments, it should be understood that various other changes, substitutions, and alterations may be made hereto without departing from the scope of the present disclosure. For example, although the present disclosure has been described as operating in wireless environments, the present disclosure may be used in any digital environment that could benefit from such technology, such as wired environments, infrared environments, WiMAX environments, femto environments, etc. Virtually any device that seeks to map media files in a memory card could enjoy the benefits of the present disclosure. These transformations can be associated with video files, video clips, music (e.g., MP3, MP4, WAV files, iTunes formatting of any kind), iPhone storage applications, iPad storage applications, memory sticks, external hard drives, or any other type of memory, storage, or repository component. Additionally, VMMC 28 could readily be replaced by a USB key to achieve the same objectives outlined herein. Hence, the USB key could be inserted into various devices in order to access the connection to the playlist: over a wireless network. Numerous other changes, substitutions, variations, alterations, and modifications may be ascertained to one skilled in the art and it is intended that the present disclosure encompass all such changes, substitutions, variations, alterations, and modifications as falling within the scope of the appended claims.

## Claims

1. A method for communicating digital files from a removable memory element (28) to a digital media presentation device (12, 60), wherein the removable memory element (28) comprises media storage (29), a file mapping module (46) and a network interface (40) to a file share device (50) having digital media files stored therein, the method comprising:
receiving, by the removable memory element (28) from the file share device (50) metadata relating to properties of a subset of the digital media files stored in the file share device (50), wherein the subset is variable and configurable by a user, and storing the metadata in the media storage (29);
providing (430), by the removable memory element (28) to the digital media presentation device (12, 60), during initialization of communication between the digital media presentation device (12, 60) and the removable memory element (28), a dummy file index;
receiving (510), by the removable memory element (28) a request (450) from the media presentation digital device (12, 60) for a selected digital file selected from the dummy file index;
replacing (530), the requested digital file by a replacement digital media file, based on a one to one mapping between the digital files referenced in the dummy file index and the subset file metadata stored in the media storage device (29), the replacement digital media file being downloaded over a network (48) from the file share device (50); and
communicating (550) the replacement digital media file to the digital media presentation device (12, 60) in place of the requested digital file to satisfy the request.

2. The method of Claim 1, wherein the digital media presentation device stores the dummy file index in a cached table of files, and wherein each of the files of the cached table include a respective file size, a respective file name, and a respective memory address.

3. The method of Claim 1 or 2, further comprising:
presenting the replacement digital media file on a display of the digital media presentation device, wherein the replacement digital media file includes image data.

4. The method of any preceding claim further comprising a step (540) of determining whether the replacement digital media file needs to be preprocessed and, if so, preprocessing (545) the replacement digital media file prior to said communicating (550).

5. The method of any preceding claim, wherein the replacement digital media file is compressed to a different size before being communicated to the media presentation digital device.

6. The method of any preceding claim, wherein null bytes are added to the replacement digital media file in order to comport to a particular size format designated by the digital media presentation device.

7. The method of any preceding claim, wherein the replacement digital media file is converted to a particular format based on a designation by the digital media presentation device.

8. A computer readable medium including code for execution which, when executed by a processor, causes the processor to perform all steps of a method according to any one of the preceding claims.

9. A removable memory element (28) comprising:
media storage (29);
a processor operable to execute instructions;
a network interface (40) for communicating with a file share device (50) having digital media files stored therein; and
a file mapping module (46) configured to interface with the processor and the media storage (29);
wherein the removable memory element (28) is configured to perform all steps of a method according to any one of claims 1 and 4 to 7.

10. A system comprising the removable memory element (28) of claim 9, further comprising:
a network element comprising the file share device (50) coupled to a network (48) and configured to store a plurality of digital media files that can be accessed by the removable memory element (28) over the network (48); and
a digital media presentation device (12, 60).

## Patentansprüche

1. Verfahren zum Übertragen digitaler Dateien von einem entfernbaren Speicherelement (28) an eine digitale Medienpräsentationsvorrichtung (12, 60), wobei das entfernbare Speicherelement (28) einen Medienspeicher (29), ein Dateiabbildungsmodul (46) und eine Netzwerkschnittstelle (40) zu einer Dateifreigabevorrichtung (50) mit darin gespeicherten digitalen Mediendateien umfasst, wobei das Verfahren Folgendes umfasst:
Empfangen von Metadaten, von der Dateifreigabevorrichtung (50), die sich auf Eigenschaften einer Teilmenge der digitalen Mediendateien beziehen, die in der Dateifreigabevorrichtung (50) gespeichert sind, durch das entfernbare Speicherelement (28), wobei die Teilmenge variabel und von einem Benutzer konfigurierbar ist und Speichern der Metadaten in dem Medienspeicher (29);
Bereitstellen (430) der digitalen Medienpräsentationsvorrichtung (12, 60) durch das entfernbare Speicherelement (28) eines Dummy-Dateiindex während der Initialisierung der Kommunikation zwischen der digitalen Medienpräsentationsvorrichtung (12, 60) und dem entfernbaren Speicherelement (28);
Empfangen (510) einer Anforderung (450) durch das entfernbare Speicherelement (28) von der digitalen Medienpräsentationsvorrichtung (12, 60) nach einer ausgewählten digitalen Datei, die aus dem Dummy-Dateiindex ausgewählt wird;
Ersetzen (530) der angeforderten digitalen Datei durch eine digitale Ersatzmediendatei, basierend auf einer Eins-zu-Eins-Zuordnung zwischen den im Dummy-Dateiindex referenzierten digitalen Dateien und den in der Medienspeichervorrichtung (29) gespeicherten Teilmengendatei-Metadaten, wobei die digitale Ersatzmediendatei über ein Netzwerk (48) von der Dateifreigabevorrichtung (50) heruntergeladen wird; und
Übertragen (550) der digitalen Ersatzmediendatei an die digitale Medienpräsentationsvorrichtung (12, 60) anstelle der angeforderten Digitaldatei, um die Anforderung zu erfüllen.

2. Verfahren nach Anspruch 1, wobei die digitale Medienpräsentationsvorrichtung den Dummy-Dateiindex in einer zwischengespeicherten Tabelle von Dateien speichert, und wobei jede der Dateien der zwischengespeicherten Tabelle eine jeweilige Dateigröße, einen jeweiligen Dateinamen und eine jeweilige Speicheradresse enthält.

3. Verfahren nach Anspruch 1 oder 2, das ferner Folgendes umfasst:
Präsentieren der digitalen Ersatzmediendatei auf einem Display der Präsentationsvorrichtung für digitale Medien, wobei die digitale Ersatzmediendatei Bilddaten enthält.

4. Verfahren nach einem der vorhergehenden Ansprüche, das ferner einen Schritt (540) zum Bestimmen umfasst, ob die digitale Ersatzmediendatei vorverarbeitet werden muss, und falls dies der Fall ist, Vorverarbeiten (545) der digitalen Ersatzmediendatei vor dem Kommunizieren (550).

5. Verfahren nach einem der vorhergehenden Ansprüche, wobei die digitale Ersatzmediendatei auf eine andere Größe komprimiert wird, bevor sie an die digitale Medienpräsentationsvorrichtung übermittelt wird.

6. Verfahren nach einem der vorhergehenden Ansprüche, wobei Null-Bytes zu der digitalen Ersatzmediendatei hinzugefügt werden, um sich auf ein bestimmtes Größenformat zu beziehen, das von der digitalen Medienpräsentationsvorrichtung bestimmt wird.

7. Verfahren nach einem der vorhergehenden Ansprüche, wobei die digitale Ersatzmediendatei auf der Grundlage einer Bezeichnung durch die digitale Medienpräsentationsvorrichtung in ein bestimmtes Format umgewandelt wird.

8. Computerlesbares Medium, das Code zur Ausführung enthält, der, wenn er von einem Prozessor ausgeführt wird, den Prozessor dazu veranlasst, alle Schritte eines Verfahrens nach einem der vorhergehenden Ansprüche auszuführen.

9. Entfernbares Speicherelement (28), das Folgendes umfasst:
einen Medienspeicher (29);
einen Prozessor, der dafür ausgelegt ist, Anweisungen auszuführen;
eine Netzwerkschnittstelle (40) zum Kommunizieren mit einer Dateifreigabevorrichtung (50), in der digitale Mediendateien gespeichert sind; und
ein Dateiabbildungsmodul (46), das dafür konfiguriert ist, mit dem Prozessor und dem Medienspeicher (29) eine Schnittstelle zu bilden;
wobei das entfernbare Speicherelement (28) dafür konfiguriert ist, alle Schritte eines Verfahrens nach einem der Ansprüche 1 und 4 bis 7 auszuführen.

10. System, das das entfernbare Speicherelement (28) nach Anspruch 9 umfasst und das ferner Folgendes umfasst:
ein Netzwerkelement, das die Dateifreigabevorrichtung (50) umfasst, die mit einem Netzwerk (48) gekoppelt ist und dafür konfiguriert ist, eine Vielzahl digitaler Mediendateien zu speichern, auf die das entfernbare Speicherelement (28) über das Netzwerk (48) zugreifen kann; und
eine digitale Medienpräsentationsvorrichtung (12, 60).

## Revendications

1. Procédé de communication de fichiers numériques d'un élément de mémoire amovible (28) à un dispositif de présentation multimédia numérique (12, 60), l'élément de mémoire amovible (28) comprenant un stockage multimédia (29), un module de correspondance de fichiers (46) et une interface réseau (40) avec un dispositif de partage de fichiers (50) sur lequel sont stockés des fichiers multimédias numériques, le procédé consistant à :
recevoir, par l'élément de mémoire amovible (28), en provenance du dispositif de partage de fichiers (50), des métadonnées relatives à des propriétés d'un sous-ensemble des fichiers multimédias numériques stockés sur le dispositif de partage de fichiers (50), le sous-ensemble étant variable et configurable par un utilisateur, et stocker les métadonnées sur le stockage multimédia (29) ;
fournir (430), par l'élément de mémoire amovible (28) au dispositif de présentation multimédia numérique (12, 60), pendant l'initialisation d'une communication entre le dispositif de présentation multimédia numérique (12, 60) et l'élément de mémoire amovible (28), un index de fichier fictif ;
recevoir (510), par l'élément de mémoire amovible (28), en provenance du dispositif de présentation multimédia numérique (12, 60), une demande (450) relative à un fichier numérique sélectionné qui est sélectionné à partir de l'index de fichier fictif ;
remplacer (530) le fichier numérique demandé par un fichier multimédia numérique de remplacement, sur la base d'une correspondance un à un entre les fichiers numériques référencés dans l'index de fichier fictif et les métadonnées de fichier de sous-ensemble stockées sur le dispositif de stockage multimédia (29), le fichier multimédia numérique de remplacement étant téléchargé sur un réseau (48) à partir du dispositif de partage de fichiers (50) ; et
communiquer (550) le fichier multimédia numérique de remplacement au dispositif de présentation multimédia numérique (12, 60) à la place du fichier numérique demandé pour satisfaire à la demande.

2. Procédé selon la revendication 1, dans lequel le dispositif de présentation multimédia numérique stocke l'index de fichier fictif dans une table en cache de fichiers, et dans lequel chacun des fichiers de la table en cache comprend une taille de fichier respective, un nom de fichier respectif et une adresse de mémoire respective.

3. Procédé selon la revendication 1 ou 2, consistant en outre à :
présenter le fichier multimédia numérique de remplacement sur un écran du dispositif de présentation multimédia numérique, le fichier multimédia numérique de remplacement incluant des données d'image.

4. Procédé selon l'une quelconque des revendications précédentes, comprenant en outre une étape (540) consistant à déterminer si le fichier multimédia numérique de remplacement doit être prétraité, et dans ce cas, prétraiter (545) le fichier multimédia numérique de remplacement avant ladite communication (550).

5. Procédé selon l'une quelconque des revendications précédentes, dans lequel le fichier multimédia numérique de remplacement est compressé à une taille différente avant d'être communiqué au dispositif de présentation multimédia numérique.

6. Procédé selon l'une quelconque des revendications précédentes, dans lequel des octets nuls sont ajoutés au fichier multimédia numérique de remplacement afin qu'il convienne à un format de taille particulier désigné par le dispositif de présentation multimédia numérique.

7. Procédé selon l'une quelconque des revendications précédentes, dans lequel le fichier multimédia numérique de remplacement est converti dans un format particulier, sur la base d'une désignation par le dispositif de présentation multimédia numérique.

8. Support lisible par ordinateur comprenant un code destiné à être exécuté et qui, lorsqu'il est exécuté par un processeur, amène le processeur à réaliser toutes les étapes d'un procédé selon l'une quelconque des revendications précédentes.

9. Élément de mémoire amovible (28), comprenant :
un stockage multimédia (29) ;
un processeur permettant d'exécuter des instructions ;
une interface de réseau (40) pour communiquer avec un dispositif de partage de fichiers (50) sur lequel sont stockés des fichiers multimédias numériques ; et
un module de mise en correspondance de fichiers (46), configuré pour s'interfacer avec le processeur et le stockage multimédia (29) ;
l'élément de mémoire amovible (28) étant configuré pour réaliser toutes les étapes d'un procédé selon l'une quelconque des revendications 1 à 4 et 7.

10. Système comprenant l'élément de mémoire amovible (28) selon la revendication 9 et comprenant en outre :
un élément de réseau comprenant le dispositif de partage de fichiers (50) couplé à un réseau (48) et configuré pour stocker une pluralité de fichiers multimédias numériques qui sont accessibles par l'élément de mémoire amovible (28) sur le réseau (48) ; et
un dispositif de présentation multimédia numérique (12, 60) .
